Europäisches Patentamt

(19) European Patent Office

Office européen des brevets

(11) Veröffentlichungsnummer: **0 140 052**
**B1**

# EUROPÄISCHE PATENTSCHRIFT

(45) Veröffentlichungstag der Patentschrift:
07.12.88

(21) Anmeldenummer: **84110581.0**

(22) Anmeldetag: **05.09.84**

(51) Int. Cl.⁴: **F 16 J 9/00,** F 16 J 15/32,
F 16 J 15/48

(54) **Kolbendichtung.**

(30) Priorität: **05.10.83 DE 3336209**

(43) Veröffentlichungstag der Anmeldung:
**08.05.85 Patentblatt 85/19**

(45) Bekanntmachung des Hinweises auf die Patenterteilung:
**07.12.88 Patentblatt 88/49**

(84) Benannte Vertragsstaaten:
**DE FR GB IT**

(56) Entgegenhaltungen:
**CH-A- 461 203**
**DE-C- 2 947 895**
**FR-A- 2 410 771**
**GB-A- 959 910**
**US-A- 3 583 712**

**KUNSTSTOFF-BERATER, Band 18, Oktober 1973, Seite 756, Isernhagen: "Gefülltes PTFE senkt Stillstandszeiten"**
**PATENT ABSTRACTS OF JAPAN, Band 7, Nr. 163 (M-229)[1308]**

(73) Patentinhaber: **Concordia Fluidtechnik GmbH, Talstrasse 41, D-7000 Stuttgart 1 (DE)**

(72) Erfinder: **Teltscher, Rainer, Auenweg 8, D-8176 Waagkirchen (DE)**
Erfinder: **Nachtmann, Anton, Schöllerstrasse 7, D-8164 Hausham (DE)**

(74) Vertreter: **Tetzner, Volkmar, Dr.-Ing. Dr. jur., Van-Gogh-Strasse 3, D-8000 München 71 (DE)**

## Beschreibung

Die Erfindung betrifft eine Kolbendichtung entsprechend dem Oberbegriff des Patentanspruches.

Eine Kolbendichtung entsprechend dem Oberbegriff des Patentanspruches ist beispielsweise durch die FR-A-2 410 771 bekannt. Hierbei sind die aus mehreren Kolbenringen bestehende Gleitringdichtung und der elastisch verformbare Ring in einer gemeinsamen Ringnut des Kolbens untergebracht. Die radiale Nachstellung der Gleitringdichtung bei Verschleiss der Kolbenringe erfolgt über die im Kolben vorgesehene Bohrung und den elastisch verformbaren Ring durch das in einer Zylinderkammer vorhandene Druckmittel. Wählt man die axiale Breite der Ringnut in Abhängigkeit von der axialen Stärke der vorgesehenen Gleitringdichtung, so ist damit auch die axiale Breite des elastisch verformbaren Ringes bestimmt.

Der Erfindung liegt die Aufgabe zugrunde, eine Kolbendichtung entsprechend dem Oberbegriff des Patentanspruches so auszubilden, dass das Mass der Nachstellung der Gleitringdichtung (die einem Verschleiss durch Abrieb und/oder Verunreinigung unterliegt) beeinflusst werden kann.

Diese Aufgabe wird erfindungsgemäss durch die kennzeichnenden Merkmale des Patentanspruches gelöst.

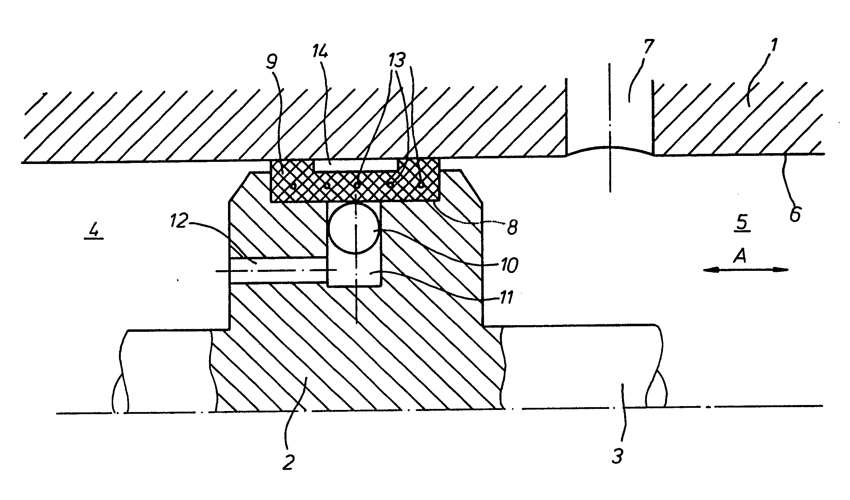

Als Ausführungsbeispiel der Erfindung ist in der Zeichnung ein Querschnitt durch ein pneumatisches Wegeventil veranschaulicht.

In einem mit 1 bezeichneten Zylinder ist ein Kolben 2 in Richtung des Doppelpfeiles A, der die Hubbewegung andeutet, verschiebbar angeordnet. Der Kolben 2 ist hier einstückig mit einer Stange 3 gearbeitet. Er teilt den Innenraum des Zylinders 1 in zwei Teilräume 4 und 5. Je nach Stellung des Kolbens kann einer dieser Teilräume mit einem in der Zylinderwand vorgesehenen Anschlusskanal 7 verbunden werden.

In eine Nut 8 des Kolbens 2 ist eine Gleitringdichtung 9 eingesetzt. Auf der der Zylinderwand 6 abgewandten Seite dieser Gleitringdichtung ist ein O-Ring 10 angeordnet, der in einer Ringnut 11 sitzt, welche über eine Bohrung 12 mit dem Teilraum 4 in Verbindung steht.

Der in dem Teilraum 4 herrschende Überdruck P wirkt somit auch auf die Innenseite des O-Rings 10. Unter der Einwirkung des Drucks presst dieser O-Ring die Gleitringdichtung 9 gegen die Zylinderwand 6. Diese Gleitringdichtung unterliegt einem Verschleiss durch Abrieb und/oder Verunreinigung. Sie wird dann durch den sich aufweitenden O-Ring 10 nachgestellt, wobei das Mass dieser Nachstellung durch die Wahl der Schnurstärke des O-Rings beeinflusst werden kann.

Die Gleitringdichtung 9 besteht aus einem Kunststoffmaterial, das ausreichende Fliesseigenschaften aufweist, so dass sich die Gleitringdichtung dichtend an die Zylinderwand anlegt. Dieses Fliessen hat indes den unerwünschten Effekt, dass die Gleitringdichtung beim Überfahren des Anschlusskanals 7 nachgibt und sich dort verhakt oder zumindest erhöhtem Verschleiss ausgesetzt ist. In die Gleitringdichtung 9 sind daher hier nur schematisch angedeutete Glasfasern 13 eingelegt oder eingearbeitet. Diese Glasfasern verleihen der Gleitringdichtung eine ausreichende Steifheit und Trägheit, so dass sie beim Überfahren des Anschlusskanals 7 nicht nachgeben kann. Sie verhindern andererseits jedoch nicht das langfristige Fliessen des Kunststoffes, welches nötig ist, um eine gute Abdichtung gegenüber der Zylinderwand zu erzielen.

Die Gleitringdichtung weist somit langfristig gesehen Fliesseigenschaften auf, während ihr kurzfristiges Verhalten steif ist. Dies ist auch erwünscht, da in der normalen Stellung der Kolben 2 links oder rechts von dem Anschlusskanal 7 positioniert ist, wo Fliessen erwünscht ist, während das Überfahren dieses Anschlusskanals nur kurze Zeit beansprucht, in der die Glasfasern die Steifheit der Gleitringdichtung gewährleisten.

Die Glasfasern 13 können natürlich nicht nur, wie im Ausführungsbeispiel gezeigt, in Umfangsrichtung in die Gleitringdichtung eingearbeitet sein, sondern können sich auch in radialer oder axialer Richtung erstrecken.

Auf der der Zylinderwand 6 zugewandten Seite der Gleitringdichtung 9 ist diese weiterhin mit einem Freistich 14 versehen. Durch diesen Freistich verkleinert sich die Reibungsfläche der Gleitringdichtung gegenüber der Zylinderwand, wodurch der Verschleiss geringer wird.

## Patentanspruch

Kolbendichtung, insbesondere für pneumatische Wegeventile und Zylinder,

a) wobei in einer umlaufenden Nut (8) des Kolbens (2) eine aus Kunststoff bestehende Gleitringdichtung (9) angeordnet ist, die die Abdichtung gegenüber der Zylinderwand (6) gewährleistet,

b) wobei ferner der Kolben an mindestens einer Stirnfläche mit wenigstens einer Bohrung (12) versehen ist, die mit der die Gleitringdichtung (9) aufnehmenden umlaufenden Nut (8) in Verbindung steht,

c) und wobei ein elastisch verformbarer Ring (10) vorgesehen ist, der an der Innenseite der Gleitringdichtung (9) anliegt, gekennzeichnet durch folgende Merkmale:

d) der als O-Ring ausgebildete, elastisch verformbare Ring (10) ist in einer die Kolbenbohrung (12) mit der umlaufenden Nut (8) verbindenden Ringnut (11) angeordnet, wobei die Schnurstärke des O-Ringes im Hinblick auf die Nachstellung der Gleitringdichtung (9) gewählt ist;

e) die Gleitringdichtung (9) wird durch einen Gleitring gebildet, in dessen Kunststoffmasse Fasern aus härterem Material zur Erzielung einer ausreichenden Steifigkeit des Gleitringes eingebettet sind.

## Claim

Piston seal, particularly for pneumatic channel valves and cylinders,

a) in which a slide ring seal (9) which is made from plastics material and ensures sealing against the cylinder wall (6) is arranged in a groove (8) running round the piston (2),

b) and the piston is provided on at least one end face with at least one bore (12) which communicates with the groove (8) which accomodates the slide ring seal (9).

c) and an elastically deformable ring (10) is provided which rests on the inner face of the slide ring seal (9), characterised by the following features:

d) the elastically deformable ring (10) is constructed as an O-ring and is arranged in an annular groove (11) connecting the piston bore (12) to the groove (8), and the thickness of the O-ring is chosen having regard to the adjustment of the slide ring seal (9);

e) the slide ring seal (9) is formed by a slide ring in which fibres of a harder material are embedded in the plastics material in order to achieve sufficient rigidity of the slide ring.

**Revendication**

Garniture de piston, en particulier pour distributeurs et cylindres pneumatiques,

a) une garniture à anneau glissant (9) en matière synthétique étant disposée dans une gorge circonférentielle (8) du piston (2) et garantissant l'étanchéité sur la surface (6) du cylindre,

b) le piston comportant par ailleurs au moins sur une surface extrême au moins un trou (12) qui communique avec la gorge circonférentielle (8) logeant la garniture à anneau glissant (9),

c) et un anneau déformable élastiquement (10) étant prévu de manière à s'appliquer contre le côté intérieur de la garniture à anneau glissant (9),

caractérisée par les particularités suivantes:

d) l'anneau déformable élastiquement (10), qui est torique, est disposé dans une gorge annulaire (11) qui fait communiquer le trou (12) du piston avec la gorge circonférentielle (8), le diamètre ou la surface de la section de l'anneau torique étant adopté en fonction du rattrapage de jeu de la garniture à anneau glissant (9);

e) la garniture (9) est formée d'un anneau glissant dont la masse de matière synthétique enrobe des fibres de matériau dur conférant à cet anneau glissant une rigidité suffisante.